# EUROPEAN PATENT APPLICATION

(11) **EP 2 950 124 A1**
(43) Date of publication of application: **02.12.2015**
(21) Application number: 14178023.9
(22) Date of filing: 22.07.2014
(51) Int. Cl.: G02B 6/10

(54) **Integrated photonic nanowires-based waveguide**

(30) Priority: 28.05.2014 EP 14170352
(71) Applicant: Paul Scherrer Institut, 5232 Villigen (CH)
(72) Inventor: Cadarso Busto, Víctor Javier, 5210 Windisch (CH); Schift, Helmut, 2503 Biel (CH); Llobera, Andreu, 08203 Sabadell (ES)
(74) Representative: Fischer, Michael

(57) **Abstract**

It is the objective of the present invention to provide a waveguide that has excellent optical properties and can be easily produced.

This objective is achieved according to the present invention by a photonic nanowires based waveguide, comprising:
a) a plurality of nanowires; each nanowire having a ridge shape;
b) said nanowires being supported by a support substrate or partially or totally free standing;
c) said support substrate further supporting interfacing waveguides disposed on both sides of said plurality of nanowires.

The special concept of present invention allows to al0ign a number of ridge-shaped nanowire that enables to control the amount of light being outside the solid waveguide in the evanescence field. Further, the design is compatible with solid waveguides and offers the possibility to confine (guide the light) within a multiple waveguide arrangement.

## Description

The present invention relates to an integrated photonic nanowires-based waveguide.

Typical waveguides are composed of a core and one or more surrounding media (claddings and/or external environment). The aim is to couple and guide the light in the core and to take the surrounding medium as a means to keep the light confined within and around the core region. This can be done by reflection (including but not limited to total, partial or anti-resonant reflection) or by adiabatic effects, i.e. the continuous deflection like in a graded index fiber. Normally a so-called evanescent field is formed and a percentage of the light that is guided in the waveguide is coupled in the surface of the core and propagates in the surrounding medium. The amount of light coupled into the evanescent field depends on the difference in the refractive index from the core and the surrounding medium and on the size of the core.

While the core is often made of a solid material with fixed refractive index, a change in the optical properties in the surrounding medium (ex. refractive index, absorption, etc.) can influence the overall transmission characteristics and the shape of the optical modes coupled into the waveguide. Therefore the core is often composed or equipped with a possibility to vary its characteristics, e.g. by being fluidic (for easy exchange), porous (for take-up of additives) or doped (to be susceptible to external stimulus or excitation).

Cladding is obtained by using one or more layers of materials of lower refractive index (solid, liquid or gaseous), in intimate contact with a core material which generally (but not always) has a higher refractive index. The cladding causes light to be confined to the core of the waveguide by total internal reflection at the boundary between the two materials or in the area of transition. Light propagation in the cladding outside this area is suppressed in a typical waveguide. Some fibers can support cladding modes in which light propagates in the cladding as well as the core. Depending on the lateral dimensions of the core, and the refractive index contrast between core and cladding, a single mode or multiple modes of light are propagating in the core along the direction of the waveguide, which are characterized by a lateral intensity distribution of the light and the ability to propagate along the light guide. Specific applications use light guides for the formation of stationary intensity distributions between two ends of the guide by using resonant backcoupling of light using mirrors or gratings, or by formation of closed waveguide rings.

The use of nanometric structures to enhance the evanescent field has previously been achieved, either splitting the waveguide in two by means of a few tens of nanometer gap, forming a slot-waveguide [1], or reducing the total dimensions of the waveguide below the working wavelength, forming a single photonic nanowire [2]. Both approaches can be considered as subwavelength photonic structures and have been demonstrated to be highly sensitive sensing elements [3] [4] [5]. However, the sensing principle in the slotted-waveguides relies in the presence of a specific analyte in the nanoslit (i.e. the nanometric channel within the slotted-waveguide, which splits the core into two equal parts/segments). This fact drastically reduces the range of applications of the slot-waveguides and increases the complexity of sensing systems. Conversely, the photonic nanowires are defined with a nanometric lateral dimension. This approach is extremely advantageous for optical sensing, since under this configuration a significant portion of the light propagates outside of the nanowire [6]. Here, there is a strong light-analyte interaction, without the complexity of bringing the analyte into a nanoslit. However, this approach is usually limited by the use of single so-called nanoribbons or nanofibers. Hence, such structures are fabricated either directly at a fiber structure, or as growth wires from a substrate that needs to be individually picked and placed into a fiber or other waveguide to couple the light. This drastically reduces their degree of integration due to their low compatibility with conventional MEMS and silicon technologies. Furthermore, this results in an increased complexity to develop reproducible devices or even complete diagnosis systems, which has prevented the use of such photonic structures into any commercial application.

It is therefore the objective of the present invention to provide a waveguide that has excellent optical properties and can be easily produced.

This objective is achieved according to the present invention by a photonic nanowires based waveguide, comprising:
a) a plurality of nanowires; each nanowire having a ridge shape;
b) said nanowires being supported by a support substrate or partially or totally free-standing;
c) said support substrate further supporting interfacing waveguides disposed on both sides of said plurality of nanowires.

The special concept of present invention allows aligning a number of ridge-shaped nanowires that enables to control the amount of light being outside the solid waveguide. Further, the design is compatible with solid (non-segmented) waveguides and offers the possibility to confine (guide the light) within a multiple waveguide arrangement.

Advantageously, the aspect ratio of the nanowires is at least 2:1, preferably >>1. Some examples have shown excellent results where the aspect ratio is about 20:1 or even larger.

In order to control the amount of light being guided in the evanescent field outside of the nanowires, at least one dimension of the nanowire other than the propagation one has to be smaller than the coupled light wavelength. Also both dimensions of the nanowire other than the propagation one can be smaller than the coupled light wavelength.

To support the goal of the present invention to achieve the present waveguide behaving like a single nanowire waveguide, the plurality of nanowires can be disposed according to at least one of the following design options: array-like, ordered, regular and disordered, semi-random, random, variable period or thickness as an array of nanowires.

Again, to control the amount of light in the evanescent field, said nanowires may comprise one of more of the following design options: perforated ridges, short interruptions, stabilization posts, roughness, draft angle. Alternatively or additionally, the nanowires can be bent in any direction and/or hollow.

Another design option to control the amount of light in the evanescent field can be realized when the ridge of the nanowires comprise a local thickness variation and/or at least a partial coating.

Preferred material for the support substrate, but not restricted, can be achieved when the support substrate is one the following: silicon, glass, polymer, metal, multilayer structures, i.e. anti-resonant reflecting layers to form an ARROW waveguide or a fabry-perot waveguide. The support substrate will act as the cladding on that geometrical side. It can be realized as a solid substrate at the top or the bottom of the ridges with or without antireflective coating, restricting light-guiding to the area covered by the ridges, or as a membrane-like link (intermediate substrate) between the ridges which is thin enough to suppress extensive lateral losses. It is used for stability and alignment of the ridges, and may have a role (porosity, doping, surface chemistry) in concrete applications. The substrate can be made in the same material or a different material than the ridges. Alternatively, the nanowires can be totally or partially suspended, e.g. between two solid waveguides at both ends.

Appropriate methods for the fabrication of the waveguide can be achieved when said plurality of nanowires is produced according to an additive fabrication method and/or a subtractive fabrication method and/or a molding fabrication method. Typical options for the fabrication of the nanowire-based waveguide are realized by selecting the fabrication method from different techniques that may include one or more of the following:
a) Etching, photolithography, two-photon polymerization, direct writing (i.e. laser, electron beam, focused ion beam), electron-beam lithography, etc;
b) Spincoated films, non-supported films, release from surface, sacrificial layers (selective etching);
c) Embedded design, also applicable if one or two sides; wherein the smaller ones are attached to the support substrate or covered by the same or another support substrate;
d) Molding, incl. vertical sidewalls and/or draft angle and/or thickness variations;
e) Made from block copolymers such as blocks with different refractive indices and/or different etching behavior.

The fabrication can be done on planar substrates or in non-planar substrates, e.g. (pre-patterned or curved) with surface topography or even bendable or completely 3D surfaces, as long as the waveguide principle is preserved.
As to the material for the formation of the nanowires, the material for the nanowires is selected from one or more of the following materials: polymers, doped polymers, sol-gels, insulators, semi-conductors, hybrid organic-inorganic materials, hydro-gels, a combination of such materials, and any coated version of such materials, i.e. metallic or insulating coatings.

Regarding the material used, it may comprise a single material or the use of an arbitrary large number of them. Connection between the materials may be sharp or graded heterojunctions, but other configurations may also be possible. In addition, the material of the nanowire may differ from both the substrate and the interfacing waveguides.

Preferred embodiments of the present invention are hereinafter described with reference to the attached drawings which depict in:

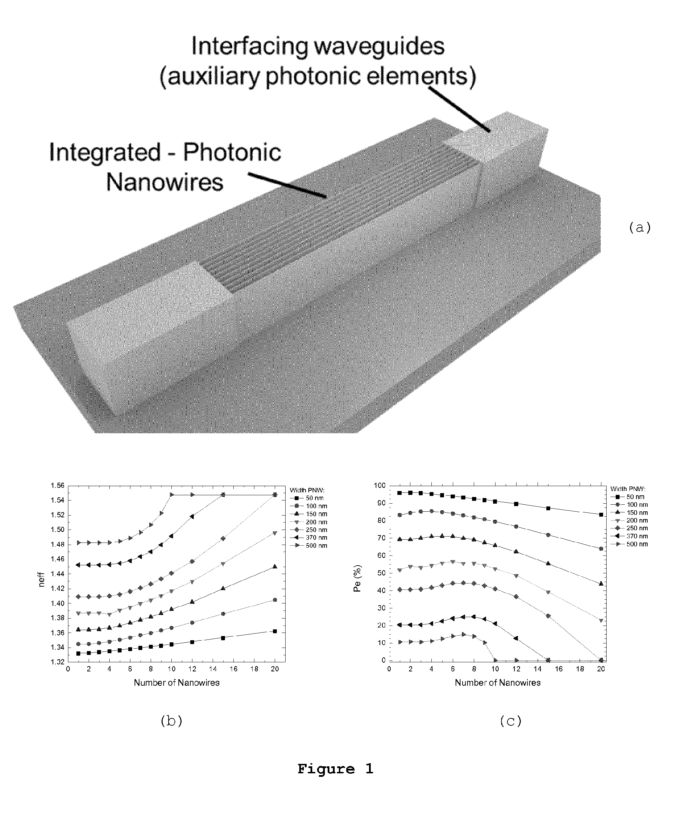

- Figure 1: (a) a schematic representation of an Integrated Photonic Nanowire array-based waveguide connected to interfacing classical waveguides as an example of auxiliary photonic elements; numerical simulations of the effective refractive index n_{eff} (b) and the percentage of light intensity propagating in the environment (Pₑ) versus the number of photonic nanowires for different nanowires widths (c);

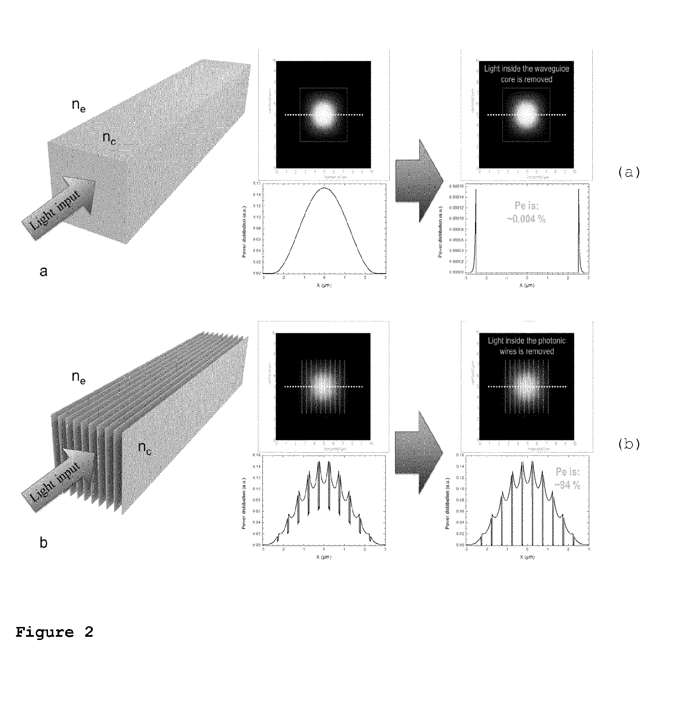

- Figure 2: (a) a schematic representations of a standard optical waveguide 5x5 µm² with a core refractive index (n_{c}) of 1.55, the numerically simulated light distribution into the fundamental mode and the EF of such waveguide and (b) a schematic representations of proposed integrated photonic nanowires composed waveguide with total cross-section dimensions of 5x5 µm² segmented into 10 nanowires with a n_{c} of 1.55, the numerically simulated light distribution into the fundamental mode and the EF of such segmented waveguide; and

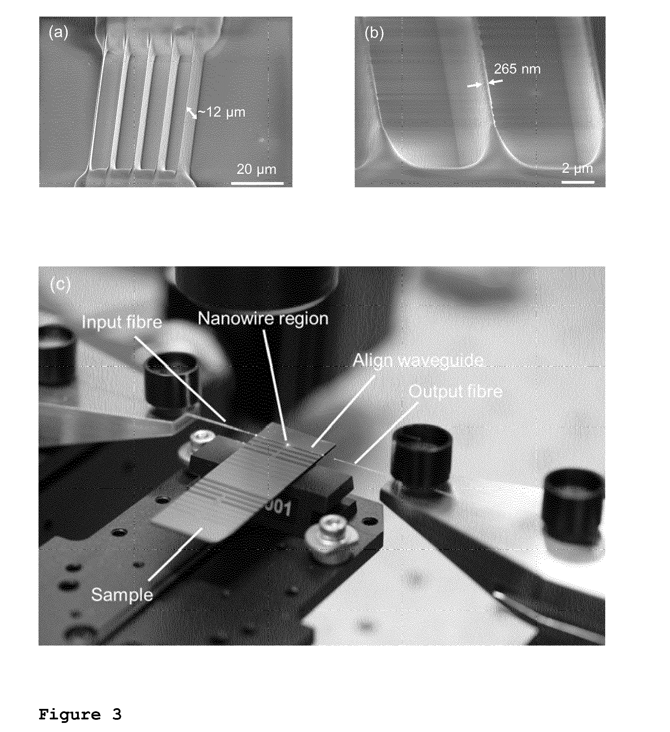

- Figure 3: a SEM picture of (a) an integrated photonic nanowires array composed waveguide with a height of 12 µm and (b) increased magnification of the same structure showing the integrated photonic nanowires with a width of 265 nm, resulting in an aspect ratio of ∼45 and (c) an optical image of the coupling of light into such segmented waveguide and the out-coupling light.

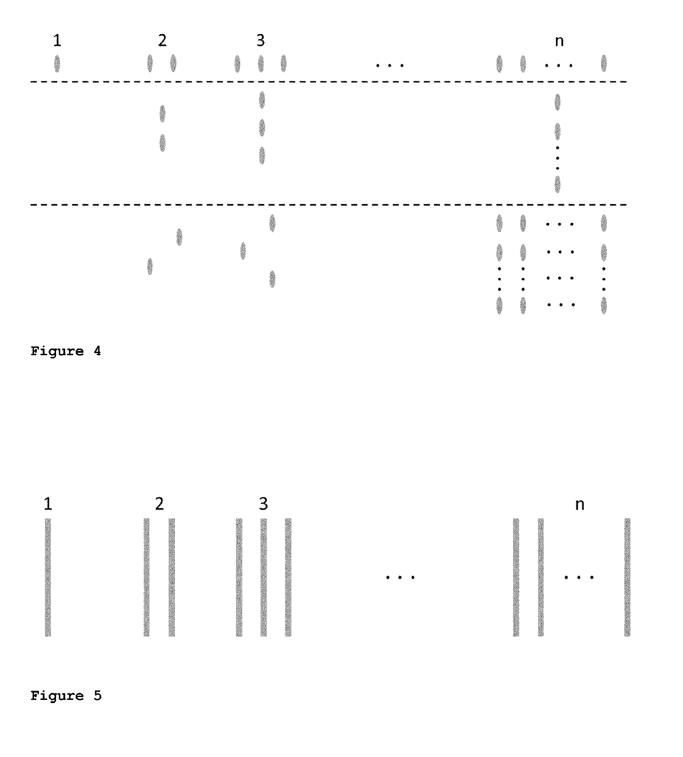

- Figure 4: a schematic representation of possible cross-section distributions of nanowires with 2 dimensions smaller than the working wavelength. The representation shows increasing number of combined equidistant nanowires. The distribution can be organized or randomized and equidistant or non-equidistant in one or both direction.
- Figure 5: a schematic representation of possible cross-section distributions of nanowires with 1 dimension smaller than the working wavelength. The representation shows increasing number of combined nanowires. The distribution can be organized or randomized and equidistant or non-equidistant.

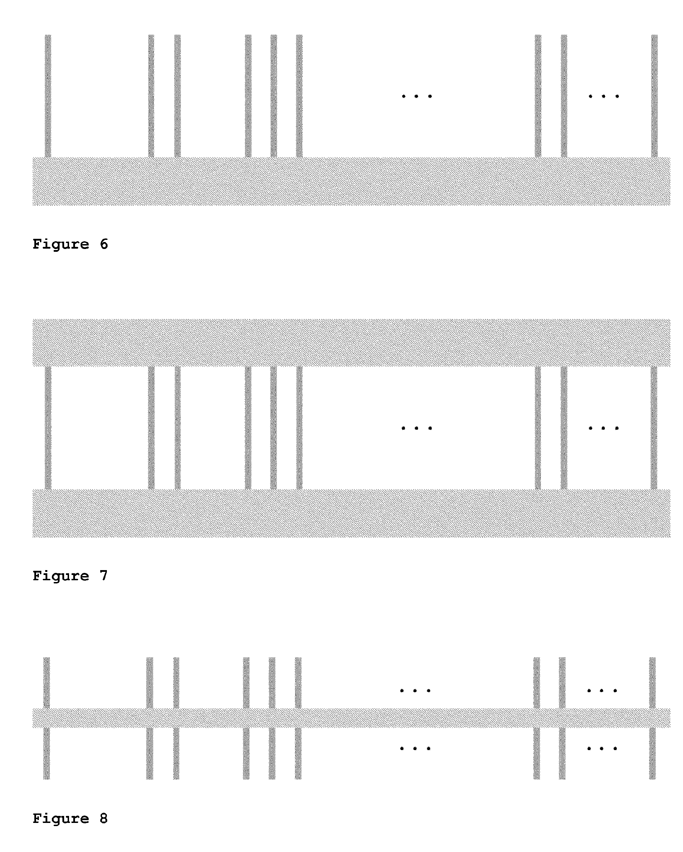

- Figure 6: a schematic representation of possible cross-section distributions of nanowires with 1 dimension smaller than the working wavelength placed on a substrate that can be on the bottom or top.
- Figure 7: a schematic representation of possible cross-section distributions of nanowires with 1 dimension smaller than the working wavelength placed on a combined top and bottom substrates.
- Figure 8: a schematic representation of possible cross-section distributions of nanowires with 1 dimension smaller than the working wavelength placed on an intermediate substrate.

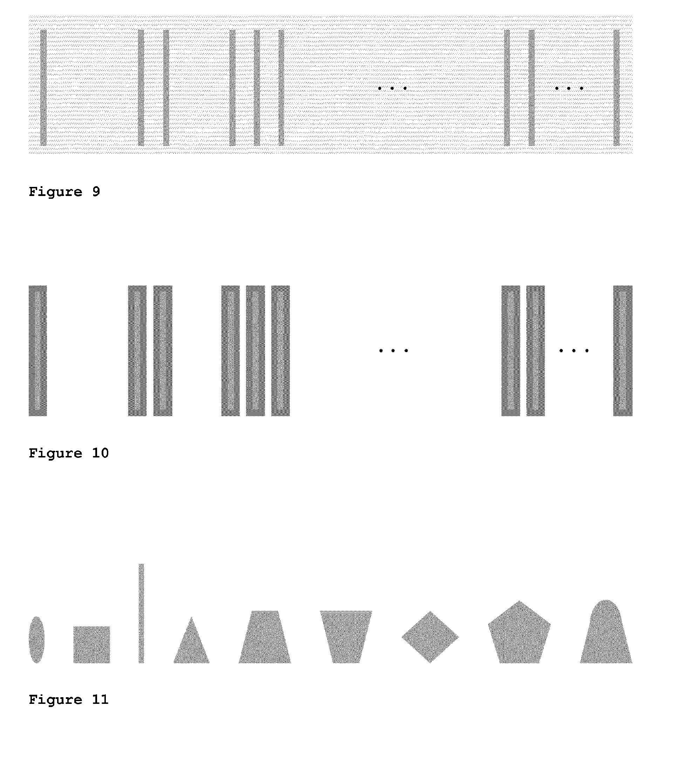

- Figure 9: a schematic representation of possible cross-section distributions of nanowires with 1 dimension smaller than the working wavelength fully embedded on a medium. Such configuration is also compatible with the substrate configurations presented in Figures 6, 7 and 8. The nanowires can be also partially embedded. This option is also compatible with the 2D nanowires.
- Figure 10: a schematic representation of possible cross-section distributions of nanowires with 1 dimension smaller than the working wavelength fully coated by another material. Such configuration is also compatible with the substrate configurations presented in Figures 6, 7 and 8 and they can be further embedded in another material as shown in figure 9. This option is also compatible with the 2D nanowires.
- Figure 11: schematic representation of possible cross-sections of 1D and 2D nanowires. Figures 1 - 10 shows rectangular like nanowires, but the shape can be arbitrary as shown this examples.

Hereinafter the concept of an Integrated photonic nanowires-based waveguide 2 is described and shown in Figure 1. Presently, thin wires (1D) or fences (2D) 4 directly aligned in a substrate 6 in isolated or in an array configuration to couple the light. The array of such nanowires 4 behaves equivalently to a standard waveguide but with an extremely large amount of light, coupled, propagating, and interacting in and with the surrounding medium.
Each of this wires (fibers) (2D) or fences 4 (lamellae, 1D) has at least one lateral dimension smaller than the coupled light's wavelength. The smaller this nanometric dimension is the larger will be the formed evanescent field. The index contrast between the integrated photonic wires (I-PNW) and the surrounding medium (polymer and air or water, respectively, but also other like Si,

hybrid organic-inorganic materials, sol-gels, hydrogels and other mediums, like buffered solutions, biological mediums, cell-growth mediums) will also affect the evanescent field that is formed. The fences 4 - the term "ridges" could also be used - are normally characterized by their aspect ratio; wires usually by their diameter. Figure 4 and 5, represent schematically possible but not limiting distributions of 1D and 2D nanowires, respectively. Since such structures can be fabricated into a complex substrate they can be easily integrated with other optical components or fluidic systems. Possible substrate configurations are presented in Figure 6 (top or bottom substrate), Figure 7 (top and bottom substrate enclosing the wires), and Figure 8 an intermediate substrate with wires on both sides.

The light is typical coupled and outcoupled from the waveguide (classical or integrated photonic nanowires based) via focusing optics, via solid (larger) integrated waveguides, via fibers (standard waveguides attached to light emission elements or to semiconductor-based detectors) or Bragg-gratings as this is also exemplarily shown in Figure 3.

As mentioned before, the plurality of multiple integrated photonic nanowires 4 are assembled in an array. This is one of the main breakthrough and novelties in the present invention since an isolated, difficult to handle photonic nanowire (which has been the strategy so far) is not considered but rather the monolithic fabrication of integrated photonic nanowires in array configuration as it can be seen in Figure 1a, other possible examples of configurations are schematized in Figures 4 and 5 for different number of nanowires of 2D and 1D nanowires. In this frame, considering the ubiquitous confined light profile, the evanescent field of an arbitrarily number of I-PNW will be coupled from one individual PNW to its neighbors behaving as a single photonic entity. Thus, the resulting light profile at the I-PNW can be envisaged as a supermode (a light intensity distribution over several ridges which resembles a light distribution over one single waveguide) where the evanescent field will be highly enhanced, with the here called ultra-evanescent field (UEF). Hence the UEF will be partially propagating in the environment medium which can be a gas, a liquid, a solid or a combination of such. It is also possible to embed or coat the wires, as shown in Figures 9 and 10, respectively, to enhance or control this effect. Numerical simulations (see Figures 1b and 1c) show that the coupling efficiency, represented by means of the effective refractive index (n_{eff}), increases as a function of the number of I-PNW. Conversely, the interaction between light and the surrounding media, represented as the percentage of light intensity propagating in the environment or surrounding medium (Pₑ), is initially stable or even increases slightly, until the density of PNW is so high that it starts to resemble a solid waveguide. This behavior anticipates that I-PNW arrays will enable strong coupling and interaction with the medium, even for low photonic nanowires density and no technologically critical configurations. The light coupled into such arrays, if they are dense enough, behaves as it would be in a standard waveguide with dimensions similar to the one of the array, while a large amount of the total waveguide area is from by surrounding medium and not core material. This is a new physical principle. Preliminary optical simulations of such system demonstrate that such integrated photonic nanowire-based waveguides will have a behavior equivalent to the one observed in a standard waveguide, but with an increase of light interacting with the medium (Pe) from around 0.005% to up to >95%.

Figure 2 shows a comparison of the light distribution once it is coupled to a standard waveguide (Figure 2a) and to an integrated photonic nanowires array waveguide with total equivalent dimensions (Figure 2b). This results in the formation of the UEF maintaining the coupling and modal behavior of the waveguide. Hence, the amount of the light in the UEF is extremely enlarged compared to the one observed in classical total internal refraction waveguides, and can be used for sensing purposes, to fabricated classical integrated optical components with increased technological tolerances or even new components.

Figure 2 shows in (a) a schematic representations of a standard optical waveguide with 5x5 µm² cross-section with a core refractive index (n_{c}) of 1.55, the numerically simulated light distribution into the fundamental mode and the EF of such waveguide. Figure 2b shows a schematic representation of the invented integrated photonic nanowires composed waveguide 2 with total dimensions of 5x5 µm² segmented into 10 nanowires with a n_{c} of 1.55, the numerically simulated light distribution into the fundamental mode and the EF of such segmented waveguide. This is the proof that the "segmented waveguide" works as an entire waveguide (= "equivalence"), but with air (or another medium with different refractive index) inside.

An example of nanowire fences 4 were fabricated using a technology combining photolithography and 3D two-photon polymerization, in which aspect ratios up to ∼45 have been achieved as shown in Figures 3(a) and (b), and coupling of light into such non-functionalized PDEs have been demonstrated, as this can be seen in figure 3(c), respectively. These results demonstrate the viability of the proposed I-PNW-based waveguide 2.

Although up to now the wires shown have rectangular or circular/elliptic shapes, there is no real limit on the shape of the wires as far as they have one or two lateral dimensions smaller than the working wavelength. Figure 11 shows some nonlimiting examples of possible cross-sections shapes that the nanowires can have.

The design of the nanowire fences 4 can have the one or more of the following options:
- Ridge waveguides: aspect ratio 2:1 and larger
- One lateral dimension (not the propagation one) smaller than the coupled light wavelength
- Perforated ridges, short interruptions, slits, stabilization posts, roughness, draft angle
- Bent waveguides
- Hollow waveguides
- Arrays, ordered, regular and disordered, semi-random, random, variable period or thickness
- With thickness variation in the lateral direction (grating, taper, depressions, expansions, dots)
- With coating (e.g. metal film, dots or particles of a different material) covering the entire ridge array, single ridges or part of them (gratings, tapers, ordered or random dots)
- Arbitrary substrate: Silicon, glass, polymer, metal, multilayer structures (i.e. anti-resonant reflecting layers to from an ARROW waveguide or a Fabry-Perot).
- With varying period (tapering of the entire array), stopping of single ridges, adding of new ridges along the direction of propagation

The proposed fabrication methods for the 1D or 2D nanowires are one or more of the following:
- Etching, photolithography, two-photon polymerization, direct writing (i.e. laser, electron beam, and/or focused ion beam), electron beam lithography, etc;
- Spincoated films, non-supported films, release from surface, sacrificial layers (selective etching);
- embedded design, also applicable if one or two sides are attached to the support substrate or covered by the same or another support substrate;
- Molding, incl. vertical sidewalls and/or draft angle and/or thickness variations;
- Made from block copolymers such as blocks with different refractive indices and/or different etching behavior.
- Made from grafting from patterned substrates (directed growth of polymer brushes)
- Extruded through nozzles with the shape of the waveguide cross-section
- Mechanical removal by scribing (combined cutting and moulding)
- Also if one or two sides (the smaller ones are attached to a substrate or covered by another substrate) - embedded design
- Molding: vertical sidewalls, draft angle, thickness variation
- Materials: polymers, doped polymers, sol-gels, insulators, and any coated version of such materials (i.e. metallic or electrically insulating coatings)
- Made from block copolymers (blocks with different refractive indices or etching behavior)

Examples for the application of the integrated nanowire based waveguide 2 are the following:

### Ridge waveguides

- Absorption detection
- Phase detection
- Fluorescent detection
- Coupling between waveguides
- Reflection (mirror, U-turn)
- Focusing element
- Beam widening and focusing, tapering, gradients
- In- and outcoupling
- Mode-shaping
- Splitting and uniting
- Ring resonators
- Match-Zehnder interferometers
- Bio-sensors
- Optical distribution and shaping
- ...

### References

[1] C.A. Barrios, K.B. Gylfason, B. Sánchez, A. Griol, H. Sohlström, M. Holgado and R. Casquel, Slot-waveguides biochemical sensor. Optics Letters 32(21), p.3080-3082, 2007.
[2] R.X. Yan, D. Gargas, and P.D. Yang, Nanowire photonics, Nature photonics 3(10): p. 569-576, 2009.
[3] Q. Liu, X. Tu, K.W. Kim, J.S. Kee, Y. Shin, K. Han, Y.-J. Yoon, G.-Q. Lo, and M.K. Park, Highly sensitive Mach-Zehnder interferometer biosensor based on silicon nitride slot waveguide. Sensors and Actuators B: Chemical, 188, p. 681-688, 2013.
[4] D.J. Sirbuly, A. Tao, M. Law, R. Fan and P.D. Yang, Multifunctional nanowire evanescent wave optical sensors, Adv. Mater. 19 (1): p. 61, 2007.H. Zhu, Y.Q. Wang, and B.J. Li, Tunable refractive index sensor with ultracompact structure twisted by poly(trimethylene terephthalate) nanowires, ACS Nano, 3 (10): p. 3110-3114, 2009.
[5] S.-H. Ahn and L. J. Guo, Dynamic Nanoinscribing for Continuous and Seamless Metal and Polymer Nanogratings, Nano Lett.: p. 4392-4397, 2009
[6] C.-G. Choi, Y.-T. Han, J. T. Kim, and H. Schift, Air-suspended two-dimensional polymer photonic crystal slab waveguides fabricated by nanoimprint lithography, Appl. Phys. Lett. 90: 221109, 2007.

## Claims

1. A photonic nanowires based waveguide, comprising:
a) a number of nanowires; each nanowire having a ridge shape;
b) said nanowires being supported by a support substrate or partially or totally free standing;
c) said support substrate further supporting interfacing waveguides disposed on both sides of said plurality of nanowires.

2. The waveguide according to claim 1 wherein the aspect ratio of the nanowires is at least 2:1.

3. The waveguide according to claim 1 or 2, wherein at least one dimension of the nanowire other than the propagation one is smaller than the coupled light wavelength.

4. The waveguide according to any of the preceding claims, wherein both dimensions of the nanowire other than the propagation one are smaller than the coupled light wavelength.

5. The waveguide according to any of the preceding claims, wherein the plurality of nanowires are disposed according to at least one of the following design options: array-like, ordered, regular and disordered, semi-random, random, variable period or thickness as an array of nanowires.

6. The waveguide according to any of the preceding claims, wherein said nanowires comprise one of more of the following design options: perforated ridges, short interruptions, stabilization posts, roughness, draft angle.

7. The waveguide according to any of the preceding claims, wherein the nanowires are bent and/or hollow.

8. The waveguide according to any of the preceding claims, wherein the ridge of the nanowires comprise a thickness variation, a partial/complete coating and/or one or different materials.

9. The waveguide according to any of the preceding claims, wherein the support substrate is one the following: silicon, glass, polymer, metal, multilayer structures, i.e. anti-resonant reflecting layers to form an ARROW waveguide or a fabry-perot waveguide.

10. The waveguide according to any of the preceding claims, wherein said plurality of nanowires is produced according to an additive fabrication method and/or a subtractive fabrication method and/or a molding fabrication method.

11. The waveguide according to claims 10 wherein the fabrication method is selected from different techniques that may include one or more of the following:
a) Etching, photolithography, two-photon polymerization, direct writing (i.e. laser, electron beam), electron beam lithography, etc;
b) Spincoated films, non-supported films, release from surface, sacrificial layers (selective etching);
c) Embedded design, also applicable if one or two sides are attached to the support substrate or covered by the same or another support substrate;
d) Molding, incl. vertical sidewalls and/or draft angle and/or thickness variations;
e) Made from block copolymers such as blocks with different refractive indices and/or different etching behavior.

12. The waveguide according to claim 10 or 11, wherein the material for the nanowires are selected one or more of the following materials: polymers, doped polymers, sol-gels, insulators, semi-conductors, hybrid organic-inorganic materials, hydro-gels, a combination of such materials, and any coated version of such materials, i.e. metallic or insulating coatings.
